# EUROPÄISCHE PATENTSCHRIFT

(11) **EP 3 296 080 B1**
(45) Veröffentlichungstag und Bekanntmachung des Hinweises auf die Patenterteilung: **04.08.2021**
(21) Anmeldenummer: 17174400.6
(22) Anmeldetag: 02.06.2017
(51) Int. Cl.: B29C 64/35, B29C 64/153, B29C 64/129, B33Y 40/00, B33Y 30/00

(54) **VORRICHTUNG ZUR HERSTELLUNG DREIDIMENSIONALER OBJEKTE**
APPARATUS FOR MANUFACTURING OF THREE-DIMENSIONAL OBJECTS
DISPOSITIF DE FABRICATION D'OBJETS TRIDIMENSIONNELS

(30) Priorität: 19.09.2016 DE 102016117633
(43) Veröffentlichungstag der Anmeldung: 21.03.2018
(73) Patentinhaber: CL Schutzrechtsverwaltungs GmbH, 96215 Lichtenfels (DE)
(72) Erfinder: Herzog, Frank, 96215 Lichtenfels (DE); Bechmann, Florian, 96215 Lichtenfels (DE); Schumann, Philipp, 96274 Itzgrund - Schottenstein (DE); Ebert, Marie-Christin, 96450 Coburg (DE)
(74) Vertreter: Hafner & Kohl PartmbB

(56) Entgegenhaltungen:
- DE-A1-102013 219 961

## Beschreibung

Die Erfindung betrifft eine Vorrichtung zur Herstellung dreidimensionaler Objekte, insbesondere eine SLM- oder eine SLS-Vorrichtung mit den weiteren Merkmalen des Oberbegriffes des Anspruches 1. Zudem betrifft die Erfindung auch ein zugehöriges Verfahren mit den Merkmalen des Anspruches 13.

Wenn von einer Vorrichtung zur Herstellung dreidimensionaler Objekte im Zusammenhang mit dem Oberbegriff des Anspruches 1 gesprochen wird, so sind damit sämtliche auch als "3D-Drucker" bekannte Vorrichtungen angesprochen, die ausgebildet und geeignet sind, durch einen schichtweisen Auftrag eines pulverförmigen, flüssigen oder pastosem Baumaterials auf eine Unterlage oder eine bereits gebildete Schicht dreidimensionale Gegenstände zu bauen, wobei die Schicht selektiv durch Strahlung, insbesondere Laserstrahlung in einen verfestigten Zustand überführt wird, sodass das gewünschte Bauteil aus abgespeicherten Baudaten schichtweise aufgebaut werden kann. Angesprochen sind insbesondere Kunstoff-Iasersinter- - oder - laserschmelzanlagen, Metallpulver-Iasersinter- oder -laserschmelzanlagen oder Stereolithographieanlagen, bei denen ein flüssiges harzartiges Material schichtweise aufgetragen und dann selektiv entsprechend den zur Verfügung stehenden Baudaten verfestigt wird.

Bei den angesprochenen Anlagen ist in einem Gehäuse ein Bauraum angeordnet, in welchem eine Auflage zum Tragen des sich bildenden Objektes vorgesehen ist. Außerdem ist eine Vorrichtung zum schichtweisen Auftragen von Baumaterial auf die Tragevorrichtung oder eine bereits gebildete Schicht vorhanden. Eine Bestrahlungseinrichtung ist über der Schicht zum selektiven Bestrahlen des aufgetragenen Baumaterials zu dessen Verfestigung vorhanden, wobei wenigstens ein Strahl der Bestrahlungseinrichtung abhängig von den Baudaten auf das Baumaterial geführt wird. Meist erfolgt die Führung des wenigstens einen Strahls der Bestrahlungseinrichtung abhängig von den Baudaten über eine Scannereinrichtung, es fallen unter den Gegenstand der Erfindung aber auch Vorrichtungen, bei denen durch eine Vielzahl von Strahlungsquellen, die ortsfest oder beweglich angeordnet sein können, eine selektive Bestrahlung des Baumaterials erfolgt. Auch ist es möglich, nur eine Strahlungsquelle, z. B. einen Laser gezielt und selektiv abhängig von gespeicherten Baudaten über der Oberfläche des Baumaterials zu führen.

Zur Verbesserung laufender Bauprozesse und/oder Beschichtungsprozesse des Baumaterials ist es wünschenswert, eine Kameravorrichtung vorzusehen, die zur optischen Erfassung und/oder auch Aufzeichnung einer sich im Fokus des Strahls der Bestrahlungseinrichtung bildenden Aufschmelz- oder Verfestigungsprozesses des Baumaterials geeignet ist. Eine solche Kamera kann aber auch zur optischen Erfassung und/oder Überwachung oder Aufzeichnung eines Beschichtungsprozesses des Baumaterials auf der Tragevorrichtung dienen, mit anderen Worten, kann entweder der Bauprozess selbst bei der selektiven Verfestigung des Baumaterials beobachtet, überwacht und aufgezeichnet werden, um z. B. eine Qualitätskontrolle des Baumaterials durchzuführen, und/oder bereits vor Belichtung der Beschichtungsprozess überwacht werden, um eine qualitative Überprüfung eines Baumaterialcoatings vorzunehmen, da eine fehlerfrei aufgebrachte Baumaterialschicht extrem wichtig für die Qualität des entstehenden Bauteils ist.

Bekanntermaßen sind optische Frontlinsen von Kameraeinrichtungen, Scannern oder sonstigen Belichtungselementen empfindlich gegen Verschmutzung z. B. durch Schmauch oder Baumaterialspritzer oder dgl., die in einem Bauraum einer derartigen SLM- oder SLS-Vorrichtung oder sonstigen 3D-Druckvorrichtungen auftreten können. Aus diesem Grunde wurde bereits dazu übergegangen, Schutzgläser zwischen der Zone des Bauprozesses und der Kameraoptik anzuordnen (z. B. DE 10 2010 052 206 A1).

Es wurde auch bereits diskutiert, ein Strahlungsreflexionsglas zwischen der Kameraoptik und der Zone des Bauprozesses vorzusehen, da bei bestimmten Materialien wie z. B. Edelmetallen eine Reflexion des Laserstrahls "in sich" zu einer Störung der Entladung des Lasers führen kann, was den Bauprozess negativ beeinflusst (DE 10 2014 005 915 A1).

DE 10 2013 219 961 A1 offenbart eine additive Fertigungsanlage für die Herstellung von Fahrzeugbauteilen, aufweisend einen Sinterraum und eine Laserlichtquelle für einen Energieeintrag in ein Sintermaterial. Zwischen dem Sinterraum und der Laserlichtquelle ist ein Wechselrahmen mit wenigstens einem Einkoppelfenster für die Transmission von Laserlicht der Laserlichtquelle angeordnet.

Derartige "Schutzgläser" müssen möglichst frei von Verschmutzung gehalten werden. Dazu wurde bereits diskutiert, eine Gasströmung in der Baukammer so zu führen, dass Schmauch und Dämpfe von einer Schutzglasvorrichtung oder Reflexionsglasvorrichtung möglichst ferngehalten werden.

Der Erfindung liegt die Aufgabe zugrunde, eine Vorrichtung mit den Merkmalen des Oberbegriffes des Anspruches 1 bzw. ein Verfahren mit den Merkmalen des Anspruches 13 derart weiterzubilden, dass eine Überwachung des Beschichtungs- oder Bauprozesses auch bei sehr langen, stark schmauchenden Bauprozessen ohne Unterbrechung möglich ist. Insbesondere soll eine manuelle Reinigung der Vorrichtung, insbesondere des Schutzglases entfallen können. Insbesondere soll aber auch vermieden werden, dass Reinigungselemente für das Schutzglas zeit- oder abschnittsweise den Strahlengang durchsetzen, was ebenfalls zu einer Störung des Bauprozesses führen würde.

Diese Aufgabe wird dadurch gelöst, dass das Kameraschutzglas und/oder das Strahlungsreflexionsglas derart ausgebildet und antreibbar gelagert ist, dass Teile des Kameraschutzglases und/oder Strahlungsreflexionsglases bei laufendem Bauprozess und Kamerabetriebes kontinuierlich durch eine Glasreinigungsvorrichtung geführt sind, wobei während der Reinigung wenigstens ein Abschnitt des Kameraschutzglases oder Reflexionsglases vor der Kameraoptik angeordnet ist.

Kern der Erfindung ist damit wenigstens eine Glasreinigungsvorrichtung, die seitlich neben dem Strahlengang der Kamera oder der Verfestigungsstrahlenquelle so angeordnet ist, dass jeweils ein Teil des Schutz- oder Reflexionsglases kontinuierlich oder oszillierend oder drehend durch die Reinigungsvorrichtung geführt werden kann. Wesentlich ist dabei, dass der Reinigungsprozess den Bauprozess und/oder den Beobachtungsprozess nicht negativ beeinträchtigt oder gar unterbricht. Das Schutz- oder Reflexionsglas kann vor der Linse der Kamera oder vor der Bestrahlungseinrichtung horizontal angeordnet sein und um eine vertikale Achse drehangetrieben werden. Es liegt aber auch im Rahmen der Erfindung, eine schräge Anordnung des Schutzglases vorzusehen und die Drehachse entsprechend schräg zu stellen. Grundsätzlich ist es aber auch möglich, ein Schutz- oder Reflexionsglas oszillierend vor der Kameraeinrichtung hin und her zu bewegen und dabei einseitig oder auf beiden Seiten Reinigungselemente vorzusehen, die bei dem hin- und her bewegten Schutz- oder Reflexionsglas dessen Unterseite reinigen. Ein Reinigungselement sollte relativ zu der zu reinigenden Glasoberfläche, insbesondere Glasunterseite bewegbar sein. Die Relativbewegung kann z. B. dadurch herbeigeführt werden, dass das Glas bewegt wird, aber auch das Reinigungselement zum Beispiel in Form einer Bürste oder Lippe hin- und her bewegt wird oder rotatorisch oder vibrierend angetrieben ist. Auch ein Ultraschallreinigungselement oder -bad liegt im Rahmen der Erfindung. Die Glasreinigungsvorrichtung sollte gegenüber dem Bauraum gekapselt sein, es muss sichergestellt werden, dass von der Glasunterseite abgetragener Schmutz nicht auf die Bauoberfläche fällt. Dazu ist ein Auffangbehälter vorgesehen, der Schmauchreste und dgl. aufnehmen kann.

Das Schutzglas kann auch eine schmutzabweisende Beschichtung aufweisen, die den Reinigungsvorgang unterstützt.

Um Schutz- oder Reflexionsglasbewegungen auf ein Minimum zu beschränken, ist es im Rahmen der Erfindung vorteilhaft, wenn der Verschmutzungsgrad laufend oder in zeitlichen Abständen detektiert wird und eine Reinigung nur dann initiiert wird, wenn wirklich eine den Bau- oder Überwachungsprozess beeinträchtigende Verschmutzung der Glasunterseite vorliegt. Dies kann durch einen optischen Sensor geschehen. Es ist aber auch möglich, dass der optische Sensor durch die Kamera selbst gebildet wird, die z. B. ein Referenzmuster unterhalb des Schutz- oder Reflexionsglases auf Klarheit und Kontrast auswertet. Die Geschwindigkeit des motorischen Antriebs der zu reinigenden Scheibe oder des Reinigungselementes kann abhängig vom Verschmutzungsgrad des Glases gesteuert werden. Der Verschmutzungsgrad kann auf unterschiedliche Weise ermittelt werden, z. B. auch durch einen auf die anhaftenden Partikel reagierenden Oberflächenwellensensor, der für Partikel und/oder Flüssigkeitshaftungen eingesetzt wird. Auch ist es zweckdienlich, wenn insbesondere bei langen Bauprozessen der Reinigungsbehälter während des Bauprozesses entleert werden kann, um den Reinigungsbehälter möglichst kompakt zu halten.

Die Erfindung ist anhand von Ausführungsbeispielen näher erläutert. Diese zeigen:
- Fig. 1: eine Vorrichtung gemäß der Erfindung mit einer rotierenden Schutzscheibe;
- Fig. 2: eine ähnlich aufgebaute Vorrichtung, bei der die Schutzscheibe hin und her schiebbar angeordnet ist und bei der zwei Reinigungsvorrichtungen vorgesehen sind.

Zunächst wird auf Zeichnungsfigur 1 Bezug genommen.

Zu Zeichnungsfigur 1 ist lediglich schematisch eine Vorrichtung 1 zur Herstellung dreidimensionaler Objekte 2 dargestellt, bei der in einem Gehäuse 3 der Vorrichtung 1 ein Bauraum 4 angeordnet ist, in welchem eine Auflage 5 zum Tragen des sich bildenden Objektes 2 bzw. des Baumaterials 6 vorgesehen ist. Das Baumaterial 6 wird in einer Dosierkammer 7 bereitgehalten, die wie der Bauraum 4 in einem Prozesskammerboden 8 eingelassen ist. Eine Vorrichtung 9 zum Auftragen des Baumaterials 6 ist zum Beispiel als über der Dosierkammer 7 und der Baukammer 4 verfahrbare Rakelvorrichtung ausgebildet, die in der Dosierkammer 7 Baumaterial 6 aufnimmt, im Bereich der Baukammer 4 eine dünne Schicht aufträgt und überflüssiges Baumaterial 6 in einen Überlaufbehälter 10 abwirft.

Über oder im oberen Bereich der Prozesskammer 11 ist eine Bestrahlungsreinrichtung 12 vorgesehen, die zum selektiven Bestrahlen des aufgetragenen Baumaterials 6 zu dessen Verfestigung dient, wobei beim Ausführungsbeispiel der Strahl 14 eines Lasers 13 durch einen Scanner 15 geführt wird, dessen Spiegel 16 durch Baudaten gesteuert sind, sodass der auf das Baumaterial 6 auftreffende Fokus 17 des Laserstrahls 14 das Baumaterial 6 auf- oder anschmelzen und dadurch verfestigen kann.

Weiterhin ist im oberen Bereich der Vorrichtung 1, d. h. über der Prozesskammer oder in einer Prozesskammerdecke eine Kameravorrichtung 20 zur optischen Erfassung und/oder auch Aufzeichnung eines sich im Fokus 17 des Strahls der Bestrahlungseinrichtung 12 bildenden Aufschmelz- oder Verfestigungsprozesses des Baumaterials 6 und/oder zur optischen Erfassung und/oder Überwachung und/oder Aufzeichnung eines Beschichtungsprozesses des Baumaterials 6 vorgesehen, wobei die Optik 21 der Kameravorrichtung 20 durch ein Kameraschutzglas 30 oder die Optik des Scanners 15 durch ein Strahlungsrefelxionsglas von dem laufenden Bauprozess getrennt ist.

Es sei angemerkt, dass das Strahlungsrefelxionsglas auch als Kameraschutzglas 30 eingesetzt werden kann und das Kameraschutzglas 30 bei entsprechender Ausbildung auch als Strahlungsrefelxionsglas, weswegen im Ausführungsbeispiel vor den beiden optischen Elementen Kamera und Scanner nur ein Schutzglas angeordnet oder dargestellt ist.

Es liegt aber auch im Rahmen der Erfindung, für die Kamera einerseits und den Scanner andererseits jeweils getrennte Schutzgläser vorzusehen, die aber auf die entsprechende nachfolgend beschriebene Weise gereinigt werden können.

Das Schutzglas ist derart ausgebildet und antreibbar gelagert, dass Teile des Schutzglases bei laufendem Bauprozess und/oder Kamerabeobachtungsprozess kontinuierlich durch eine Glasreinigungsvorrichtung 31 geführt werden, wobei während der Reinigung wenigstens ein anderer Abschnitt des Schutzglases vor der Kameraoptik und/oder der Bestrahlungsoptik verbleibt.

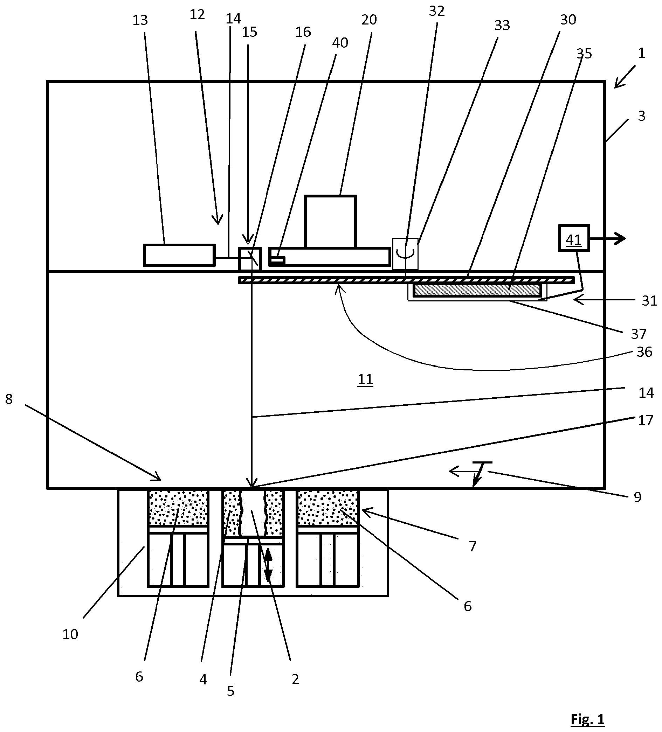

Bei dem in der Figur 1 dargestellten Ausführungsbeispiel ist das Schutzglas 30 horizontal angeordnet und um eine vertikale Achse 32 durch einen Elektromotor 33 angetrieben.

Die Glasreinigungsvorrichtung 35 ist seitlich neben der optischen Achse der Kameraeinrichtung 20 und/oder der Bestrahlungsoptik, nämlich Scanner 15 angeordnet.

Die Glasreinigungsvorrichtung 31 umfasst wenigstens ein als Bürste ausgebildetes Reinigungselement 35, das die Unterseite 36 des Schutzglases 30 beaufschlagt und daran anhaftende Schmauchpartikel und dgl. in einen Auffangbehälter 37 ablöst.

Die Glasreinigungsvorrichtung 31 ist insgesamt gegenüber der Prozesskammer 11 gekapselt, d. h. es ist sichergestellt, dass in der Glasreinigungsvorrichtung 31 bzw. im Auffangbehälter 37 vorhandene Partikel nicht auf die Bauoberfläche gelangen können.

Die Erfindung umfasst weiterhin einen in- oder an der Glasreinigungsvorrichtung 31 angeordneten Sensor 40, der die Verschmutzung des Schutzglases 30 detektieren kann. Der Sensor 40 ist vorzugsweise ein optischer Sensor, der durch eine Transmission des Schutzglases 30 feststellt, ob und ggf. wie Partikel an der Unterseite des Schutzglases 30 anhaften. Der Sensor kann aber auch durch die Kamera gebildet werden,

Die Geschwindigkeit des motorischen Antriebs 33 der Scheibe oder des Reinigungselementes 35 ist abhängig vom Ergebnis des durch den Sensor 40 detektierten Verschmutzungsgrad des Glases steuerbar.

Der Auffangbehälter 37 kann über eine Absaugvorrichtung 41 während des Bauprozesses abgesaugt und damit geleert werden.

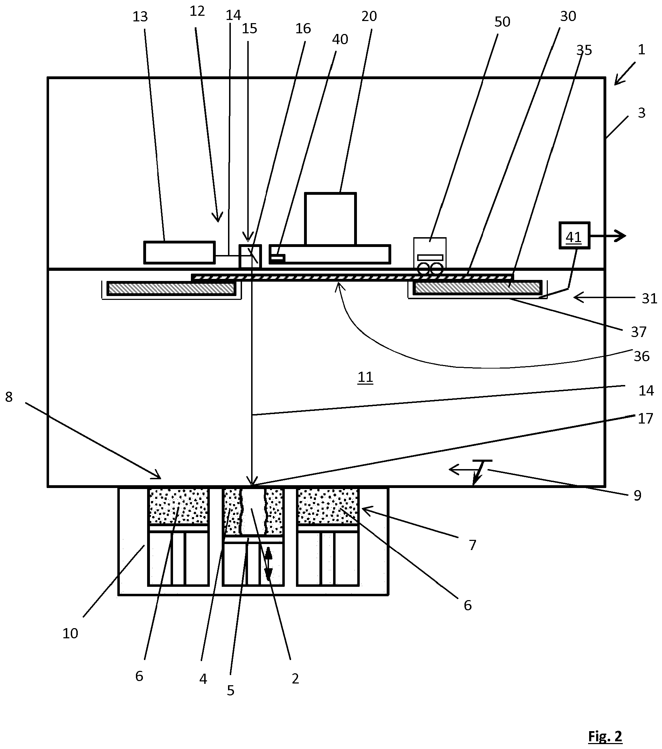

In Figur 2 ist eine in weitgehenden Abschnitten zu Figur 1 identische Vorrichtung dargestellt, allerdings ist der Elektromotor 33 nicht dazu ausgebildet, eine Achse 32 sind das Schutzglas 30 drehanzutreiben, sondern das Schutzglas 20 ist über nicht dargestellte Führungselemente nach links und rechts verschiebbar gelagert, der Elektromotor 33 weist Rollensätze 50 auf, durch die das Schutzglas 20 nach links und rechts durch Reibkontakt verschoben wird.

Links und rechts von der Kamera und/oder den optischen Elementen der Bestrahlungseinrichtung 12 sind zwei Glasreinigungsvorrichtungen 31a und 31b angeordnet, das Schutzglas 30 kann so nach links und rechts verfahren werden, dass alle Bereiche des Schutzglases 30 in zeitlichen Abständen gereinigt werden können und immer ein Abschnitt des Schutzglases 30 entweder vor der Kameraoptik oder der Bestrahlungsoptik verbleibt.

## Patentansprüche

1. Vorrichtung (1) zur Herstellung dreidimensionaler Objekte (2), insbesondere eine SLM, SLS, selektive Laserschmelz-oder selektive Lasersintervorrichtung im Wesentlichen umfassend:
- einen in einem Gehäuse (3) der Vorrichtung (1) angeordneten Bauraum (4), in welchem eine Auflage (5) zum Tragen des sich bildenden Objektes (2) vorgesehen ist,
- eine Vorrichtung (9) zum Auftragen von Schichten des Baumaterials (6) auf die Auflage (5) oder eine zuvor gebildete Schicht,
- eine Bestrahlungseinrichtung (12) zum selektiven Bestrahlen des aufgetragenen Baumaterials (6) zu dessen Verfestigung, wobei wenigstens ein Strahl (14) der Bestrahlungseinrichtung (12) abhängig von gespeicherten Baudaten auf das Baumaterial (6) geführt wird, **dadurch gekennzeichnet, dass**
- eine Kameravorrichtung (20) zur optischen Erfassung und/oder Aufzeichnung eines sich im Fokus (17) des Strahls der Bestrahlungseinrichtung (12) bildenden Aufschmelz- oder Verfestigungsprozesses des Baumaterials (6) und/oder zur optischen Erfassung und/oder Überwachung und/oder Aufzeichnung eines Beschichtungsprozesses des Baumaterials (6) auf der Tragevorrichtung angeordnet ist, wobei die Optik (21) der Kameravorrichtung (20) oder die der Bestrahlungseinreichtung (12) durch ein Schutzglas (30) von dem laufenden Bauprozess getrennt ist, wobei
- das Schutzglas (30) derart ausgebildet und antreibbar gelagert ist, dass Teile des Schutzglases (30) bei laufendem Bauprozess und/oder Kamerabeobachtungsprozess durch eine Glasreinigungsvorrichtung (31) geführt sind, wobei während der Reinigung wenigstens ein Abschnitt des Schutzglases (30) vor der Kameraoptik und/oder der Bestrahlungsoptik angeordnet ist.

2. Vorrichtung nach Anspruch 1, **dadurch gekennzeichnet, dass** das Schutzglas (30) um eine vertikale Achse (32) drehangetrieben ist.

3. Vorrichtung nach Anspruch 2, **dadurch gekennzeichnet, dass** wenigstens eine Glasreinigungsvorrichtung (31) seitlich neben der optischen Achse der Kameraeinrichtung und/oder der Bestrahlungseinrichtung (12) angeordnet ist.

4. Vorrichtung nach einem der vorhergehenden Ansprüche, **dadurch gekennzeichnet, dass** die Glasreinigungsvorrichtung (31) wenigstens ein Reinigungselement (35) umfasst, das die Unterseite (36) des Schutzglases (30) beaufschlagt.

5. Vorrichtung nach Anspruch 4, **dadurch gekennzeichnet, dass** das Reinigungselement (35) eine Bürste, eine Lippe oder ein sonstiges Abstreifelement ist oder als in einem Ultraschallbad angeordnete Reinigungseinheit ausgeildetist.

6. Vorrichtung nach Anspruch 5, **dadurch gekennzeichnet, dass** die Bürste oder das Abstreifelement mechanisch gegenüber dem Schutzglas (30) bewegbar ist.

7. Vorrichtung nach einem der vorhergehenden Ansprüche, **dadurch gekennzeichnet, dass** die Glasreinigungsvorrichtung (31) gegenüber der Prozesskammer gekapselt ist.

8. Vorrichtung nach einem der vorhergehenden Ansprüche, **dadurch gekennzeichnet, dass** die Glasreinigungsvorrichtung (31) einen Auffangbehälter (37) für die von dem Schutzglas (30) abgenommenen Schmauchreste umfasst.

9. Vorrichtung nach einem der vorhergehenden Ansprüche, **dadurch gekennzeichnet, dass** in/oder an der Glasreinigungsvorrichtung (31) ein Sensor (40) angeordnet ist, der die Verschmutzung des Schutzglases (30) detektiert.

10. Vorrichtung nach Anspruch 9, **dadurch gekennzeichnet, dass** der Sensor (40) durch die Kamera (20) oder einen Oberflächenwellensensor gebildet wird.

11. Vorrichtung nach einem der vorhergehenden Ansprüche, **dadurch gekennzeichnet, dass** die Geschwindigkeit des motorischen Antriebes (33) der Scheibe und/oder des Reinigungselementes (35) abhängig vom Ergebnis des Verschmutzungsgrades des Schutzglases (30) steuerbar ist.

12. Vorrichtung nach einem der vorhergehenden Ansprüche, **dadurch gekennzeichnet, dass** der Auffangbehälter (37) während des Bauprozesses entleerbar ist.

13. Verfahren zur Reinigung eines optischen Schutzglases (30) in einer Vorrichtung (1) zur Herstellung dreidimensionaler Objekte (2), insbesondere SLM- oder SLS-Vorrichtung, mit folgenden Merkmalen:
- Vorsehen eines in einem Gehäuse (3) der Vorrichtung (1) angeordneten Bauraumes (4), in welchem eine Auflage (5) zum Tragen des sich bildenden Objektes (2) höhenverstellbar gelagert ist;
- Vorsehen einer Vorrichtung (9) zum Auftragen von Schichten des Baumaterials (6) auf die Auflage (5) oder eine zuvor gebildete Schicht;
- Vorsehen einer Bestrahlungseinrichtung (12) zum selektiven Bestrahlen des aufgetragenen Baumaterials (6) zu dessen Verfestigung, wobei wenigstens ein Strahl der Bestrahlungseinrichtung (12) von gespeicherten Baudaten auf das Baumaterial (6) geführt ist, **dadurch gekennzeichnet, dass**
- eine Kameravorrichtung (20) zur optischen Erfassung und/oder Aufzeichnung eines sich im Fokus (17) des wenigstens einen Strahls (14) der Bestrahlungseinrichtung (12) bildenden Aufschmelz- oder Verfestigungsprozesses des Baumaterials (6) und/oder zur optischen Erfassung und/oder Überwachung und/oder Aufzeichnung eines Beschichtungsprozesses des Baumaterials auf der Tragevorrichtung vorgesehen ist, wobei das Schutzglas (30) vor der Optik (21) der Kameravorrichtung (20) und/oder vor der Optik (21) der Bestrahlungseinrichtung (12) angeordnet ist und eine bewegliche Lagerung des Schutzglases (30) derart vorgesehen ist, dass ein Abschnitt des Schutzglases (30) bei laufendem Bauprozess und/oder Kamerabeobachtungsprozess und/oder Beschichtungsprozess kontinuierlich durch eine Glasreinigungsvorrichtung (31) geführt wird und während der so durchgeführten Reinigung des wenigstens einen Abschnittes des Schutzglases (30) ein anderer Abschnitt des Schutzglases (30) vor der Optik der Kameraeinrichtung oder der Bestrahlungseinrichtung (12) verbleibt.

## Claims

1. Apparatus (1) for the manufacturing of three-dimensional objects (2), in particular an SLM, SLS, selective laser melting or selective laser sinter device, essentially comprising:
- a build chamber (4) arranged in a housing (3) of the apparatus (1), wherein a plate (5) is provided to carry the object that is being formed (2),
- a device (9) for applying layers of the building material (6) onto the plate (5) or the previously formed layer,
- a radiation device (12) for the selective radiation of the applied building material (6) for its solidification, wherein at least one beam (14) of the radiation device (12) is led to the building material (6) dependent on the stored build data, **characterized in that**
- a camera device (20) for the optical detection and/or recording of a melting or solidification process of the building material (6), which is forming in the focus (17) of the beam of the radiation device (12),
and/or for the optical detection and/or monitoring and/or recording of a process laminating the building material (6) on the carrier plate,
wherein the optical unit (21) of the camera device (20) or the radiation device (12) is separated by a protective pane (30) from the running building process, wherein
- the protective pane (30) is embodied and arranged to be drivable so that the parts of the protective pane (30) in the running building process and/or the camera monitoring process are led through a glass cleaning device, whereas at least one section of the protective pane (30) is arranged during the cleaning in front of the optical camera unit and/or the optical radiation unit

2. Apparatus according to claim 1, **characterized in that** the protective pane (30) is rotatable around a vertical axis (32) by a rotary drive.

3. Apparatus according to claim 2, **characterized in that** least one glass cleaning unit (31) is arranged laterally, next to the optical axis of the camera unit and/or the radiation unit (12).

4. Device according to one of the foregoing claims, **characterized in that** the glass cleaning unit (31) comprises at least one cleaning element (35), acting upon the bottom side (36) of the protective pane (30).

5. Apparatus according to claim 4, **characterized in that** the cleaning element (35) is provided with a brush, a lip or another separator element or it is embodied as a cleaning unit arranged in an ultrasonic bath.

6. Apparatus according to claim 5, **characterized in that** the brush or the separator element are movable mechanically relative to the protective pane (30).

7. Apparatus according to one of the foregoing claims, **characterized in that** the glass cleaning unit (31) is enclosed by the process chamber.

8. the glass cleaning unit (31) comprises a collection tank (37) for the foam residues that are collected from the protective pane (30).

9. Apparatus according to one of the foregoing claims, **characterized in that** a sensor (40) is arranged in or on the glass cleaning unit (31), which detects the soiling of the protective pane (30).

10. Apparatus according to claim 9, **characterized in that** the sensor (40) is embodied by the camera (20) or an acoustic surface wave sensor.

11. Apparatus according to one of the foregoing claims, **characterized in that** the speed of the motorized drive (33) of the pane and/or the cleaning element (35) is controllable, depending on the degree of soiling on the protective pane (30).

12. Apparatus according to one of the foregoing claims, **characterized in that** the collection tank (37) can be emptied during the building process.

13. Method for cleaning an optical protective pane (30) in the apparatus (1) for manufacturing three-dimensional objects (2), in particular an SLM or SLS device with the following characteristics:
- A build chamber (4) arranged in a housing (3) of the apparatus (1) is provided, in which a height-adjustable plate (5) is arranged to carry the object being formed (2);
- A device (9) is provided for applying layers of the building material (6) onto the plate (5) or the previously formed;
- A radiation device (12) is provided for the selective radiation of the applied building material (6) for its solidification, wherein at least one beam of the radiation device (12) is led to the building material (6) on the stored build data, **characterized in that**
- a camera unit (20) is provided for the optical detection and/or monitoring and/or recording
- of a melting or solidification process of the building material (6), which is forming in the focus (17) of the at least one beam (14) of the radiation device (12) and/or for the optical detection and/or monitoring and/or recording of a laminating process of the building material on the carrier plate; wherein
- the protective pane (30) is arranged in front of the optical camera unit (20) and/or the optical unit (21) of the radiation unit (12)
- and the protective pane (30) is arranged to be movable in such a manner that a section of the protective pane (30) is led continuously through a glass cleaning unit (31) during the running building process and/or camera monitoring process and/or laminating process and another section of the protective pane (30) remains in front of the optical camera unit or the radiation device (12) during the cleaning of the at least one section of the protective pane (30) that is being carried out this way.

## Revendications

1. Dispositif (1) de fabrication d'objets tridimensionnels (2), en particulier dispositif SLM, SLS, de fusion sélective par laser ou de frittage sélectif par laser comprenant essentiellement :
- un carter (3) de l'espace de construction (4) du dispositif (1), dans lequel est prévu un support (5) pour porter l'objet en cours de construction (2),
- un dispositif (9) pour appliquer des couches du matériau de construction (6) sur le support (5) ou une couche formée préalablement,
- un dispositif d'irradiation (12) pour irradier sélectivement le matériau de construction appliqué (6) afin de le solidifier, au moins un rayon (14) du dispositif d'irradiation (12) étant acheminé sur le matériau de construction (6) en fonction de données de construction enregistrées, **caractérisé en ce que**
- un dispositif de caméra (20) pour la saisie et/ou l'enregistrement optique d'un procédé de fusion ou de solidification du matériau de construction (6) se formant au foyer (17) du rayon du dispositif d'irradiation (12)
et/ou pour la saisie et/ou la surveillance et/ou l'enregistrement optique d'un procédé de revêtement du matériau de construction (6) est disposé sur le dispositif support,
l'optique (21) du dispositif de caméra (20) ou du dispositif d'irradiation (12) est séparé par un verre de protection (30) du procédé de construction en cours, où
- le verre de protection (30) est disposé formé et actionnable de telle sorte que des morceaux du verre de protection (30) au cours du procédé de fabrication et/ou du procédé d'observation par la caméra sont acheminés à travers un dispositif de nettoyage de verre (31), une section du verre de protection (30) étant disposé devant l'optique de la caméra et/ou l'optique d'irradiation pendant le nettoyage.

2. Dispositif selon la revendication 1, **caractérisé en ce que** le verre de protection (30) et entraîné pour tourner autour d'un axe vertical (32).

3. Dispositif selon la revendication 2, **caractérisé en ce qu'**au moins un dispositif de nettoyage de verre (31) est disposé latéralement à côté de l'axe optique du dispositif de caméra et/ou du dispositif d'irradiation (12).

4. Dispositif selon l'une quelconque des revendications précédentes, **caractérisé en ce que** le dispositif de nettoyage du verre (31) comprend au moins un élément nettoyant (35) qui appuie sur la face inférieure (36) du verre de protection (30).

5. Dispositif selon la revendication 4, **caractérisé en ce que** l'élément nettoyant (35) est une brosse, une lèvre ou un autre élément de raclage ou est constitué d'une unité de nettoyage installée dans un bain à ultrasons.

6. Dispositif selon la revendication 5, **caractérisé en ce que** la brosse ou l'élément de raclage est mobile mécaniquement par rapport au verre de protection (30).

7. Dispositif selon l'une quelconque des revendications précédentes, **caractérisé en ce que** le dispositif de nettoyage du verre (31) est encapsulé contre la chambre de procédé.

8. Dispositif selon l'une des revendictions précédentes, **caractérisé en ce que** le dispositif de nettoyage du verre (31) comprend un récipient collecteur (37) pour les résidus de fumée extraits du verre de protection (30).

9. Dispositif selon l'une quelconque des revendications précédentes, **caractérisé en ce qu'**un capteur (40) est disposé dans ou contre le dispositif de nettoyage du verre (31), qui détecte l'encrassement du verre de protection (30).

10. Dispositif selon la revendication 9, **caractérisé en ce que** le capteur (40) est constitué d'une caméra (20) ou d'un capteur d'ondes de surface.

11. Dispositif selon l'une quelconque des revendications précédentes, **caractérisé en ce que** la vitesse de l'entraînement motorisé (33) de la vitre et/ou de l'élément nettoyant (35) peut être contrôlé en fonction du résultat du degré d'encrassement du verre de protection (30).

12. Dispositif selon l'une quelconque des revendications précédentes, **caractérisé en ce que** le récipient collecteur (37) peut être vidé pendant le procédé de construction.

13. Procédé de nettoyage d'un verre de protection optique (30) dans un dispositif (1) de fabrication d'objets tridimensionnels (2), en particulier d'un dispositif SLM ou SLS, avec les caractéristiques suivantes :
- Il est prévu un espace de construction (4) disposé dans un carter (3) du dispositif (1), dans lequel un support (5) pour porter l'objet en cours de construction (2) peut être réglé en hauteur ;
- Il est prévu un dispositif (9) pour appliquer des couches du matériau de construction (6) sur le support (5) ou une couche formée préalablement ;
- Il est prévu un dispositif d'irradiation (12) pour irradier sélectivement le matériau de construction appliqué (6) afin de le solidifier, au moins un rayon du dispositif d'irradiation (12) étant acheminé sur le matériau de construction (6) en fonction de données de construction enregistrées, **caractérisé en ce que**
- un dispositif de caméra (20) pour la saisie et/ou l'enregistrement optique d'un procédé de fusion ou de solidification du matériau de construction (6) se formant au foyer (17) de l'au moins un rayon (14) du dispositif d'irradiation (12) et/ou pour la saisie et/ou la surveillance et/ou l'enregistrement optique d'un procédé de revêtement du matériau de construction sur le dispositif support est prévu, où le verre de protection (30) est disposé devant l'optique (21) du dispositif de caméra (20) et/ou devant l'optique (21) du dispositif d'irradiation (12) et une disposition mobile du verre de protection (30) est prévu de telle sorte qu'une section du verre de protection (30) et acheminée au cours du procédé de construction et/ou du procédé d'observation par caméra et/ou du procédé de revêtement en continu à travers un dispositif de nettoyage du verre (31) et pendant le nettoyage ainsi effectué de l'au moins une section du verre de protection (30), une autre section du verre de protection (30) reste devant l'optique du dispositif de caméra ou du dispositif d'irradiation (12).
